# EUROPÄISCHE PATENTSCHRIFT

(11) **EP 4 005 001 B1**
(45) Veröffentlichungstag und Bekanntmachung des Hinweises auf die Patenterteilung: **28.06.2023**
(21) Anmeldenummer: 20740604.2
(22) Anmeldetag: 14.07.2020
(51) Int. Cl.: H01M 8/04014, H01M 8/0656, H01M 8/124, H01M 8/0444, H01M 8/249, H01M 8/1231, H01M 8/04302, H01M 8/04225, H01M 8/0612, H01M 8/04828, H01M 8/04791, H01M 8/043, H01M 8/04223, H01M 8/04082, H01M 8/04089, H01M 8/04007, H01M 8/04858, H01M 8/12

(54) **BRENNSTOFFZELLENVORRICHTUNG ZU EINER VERSORGUNG ZUMINDEST EINER BRENNSTOFFZELLENEINHEIT MIT ARBEITSFLUIDEN**
FUEL CELL DEVICE FOR SUPPLYING AT LEAST ONE FUEL CELL UNIT WITH WORKING FLUIDS
SYSTÈME DE PILE À COMBUSTIBLE DESTINÉ À ALIMENTER AU MOINS UNE UNITÉ PILE À COMBUSTIBLE EN FLUIDES DE TRAVAIL

(30) Priorität: 23.07.2019 DE 102019210870
(43) Veröffentlichungstag der Anmeldung: 01.06.2022
(73) Patentinhaber: Robert Bosch GmbH, 70442 Stuttgart (DE)
(72) Erfinder: HORSTMANN, Peter, 71229 Leonberg (DE); DANNE, Thomas, 71636 Ludwigsburg (DE); HERING, Martin, Schenectady, New York NY, 12303 (US); WAHL, Stefanie, 71691 Freiberg Am Neckar (DE); MEISE, Rene, 70195 Stuttgart (DE); JANSEN, Daniel, 71063 Sindelfingen (DE); CARRE, Maxime, 70469 Stuttgart (DE)
(86) Internationale Anmeldenummer: PCT/EP2020/069831
(87) Internationale Veröffentlichungsnummer: WO 2021/013625

(56) Entgegenhaltungen:
- EP-A1- 3 429 012
- JP-A- H01 117 277
- US-A1- 2011 059 376

## Beschreibung

### Stand der Technik

In AU 2015218430 A1 ist bereits eine Brennstoffzellenvorrichtung zu einer Versorgung zumindest einer Brennstoffzelleneinheit mit Arbeitsfluiden vorgeschlagen worden, welche zumindest eine Oxidansleitungseinheit zu einer Handhabung eines oxidanshaltigen Arbeitsfluids, zumindest eine Brennstoffleitungseinheit zu einer Handhabung eines brennstoffhaltigen Arbeitsfluids und zumindest eine Inerteinheit zu einer Einspeisung zumindest eines Inertfluids in die Brennstoffleitungseinheit aufweist.

In JP H01 117277 A ist eine Brennstoffzellenvorrichtung offenbart.

In US 2011/059376 A1 ist ein Brennstoffzellensystem offenbart.

In EP 3 429 012 A1 ist ein System mit zwei elektrochemischen Zellen offenbart.

### Offenbarung der Erfindung

Die Erfindung geht aus von einer Brennstoffzellenvorrichtung zu einer Versorgung zumindest einer Brennstoffzelleneinheit mit Arbeitsfluiden, mit zumindest einer Oxidansleitungseinheit zu einer Handhabung eines oxidanshaltigen Arbeitsfluids, mit zumindest einer Brennstoffleitungseinheit zu einer Handhabung eines brennstoffhaltigen Arbeitsfluids und mit zumindest einer Inerteinheit zu einer Einspeisung zumindest eines Inertfluids in die Brennstoffleitungseinheit.

Es wird vorgeschlagen, dass die Inerteinheit zu einer Erzeugung des Inertfluids zumindest eine Brennstoffzelle umfasst, wobei ein Kathodeneinlass und ein Anodeneinlass der Inerteinheit fluidtechnisch an die Oxidansleitungseinheit angeschlossen sind. Vorzugsweise umfasst die Brennstoffzelleneinheit zumindest eine Brennstoffzelle, einen Stack aus Brennstoffzellen und/oder einen Verbund mehrerer Stacks aus Brennstoffzellen. Vorzugsweise ist die Brennstoffzelle und/oder sind die Brennstoffzellen der Brennstoffzelleneinheit als Hochtemperaturbrennstoffzellen ausgebildet. Vorzugsweise ist die Brennstoffzelleneinheit dazu vorgesehen, einen Brennstoff unter Zuführung eines Oxidans in einem Wandlungsprozess zu einer elektrischen Energiegewinnung umzusetzen. Vorzugsweise umfasst die Brennstoffzelleneinheit zumindest eine Brennstoffelektrode, welche vorzugsweise während des Wandlungsprozesses zu einem direkten Kontakt mit dem Brennstoff vorgesehen ist. Vorzugsweise umfasst die Brennstoffzelleneinheit zumindest einen Oxidanselektrode, welche vorzugsweise während des Wandlungsprozesses zu einem direkten Kontakt mit dem Oxidans vorgesehen ist. Ohne darauf beschränkt zu sein, umfasst die Brennstoffzelleneinheit beispielsweise zumindest eine Schmelzkarbonatbrennstoffzelle (MCFC) und/oder besonders bevorzugt zumindest eine Festoxidbrennstoffzelle (SOFC). Alternativ ist die Brennstoffzellenvorrichtung zu einer Versorgung einer Brennstoffzelleneinheit mit einer Protonenaustauschmembran-Brennstoffzelle (PEMFC), mit einer Phosphorsäure-Brennstoffzelle (PAFC), einer Direktmethanol-Brennstoffzelle (DMFC), einer alkalischen Brennstoffzelle (AFC) oder dergleichen vorgesehen. Unter "vorgesehen" soll vorzugsweise speziell eingerichtet, speziell ausgelegt und/oder speziell ausgestattet verstanden werden. Darunter, dass ein Objekt zu einer bestimmten Funktion vorgesehen ist, soll vorzugsweise verstanden werden, dass das Objekt diese bestimmte Funktion in zumindest einem Anwendungs- und/oder Betriebszustand erfüllt und/oder ausführt.

Vorzugsweise umfasst die Brennstoffzellenvorrichtung zumindest eine Funktionseinheit, welche einen Betrieb der Brennstoffzelleneinheit ermöglicht und/oder unterstützt. Vorzugsweise ist die Brennstoffzellenvorrichtung zu einer Handhabung der Arbeitsfluide für die Brennstoffzelleneinheit vorgesehen. Die Handhabung umfasst, ohne darauf beschränkt zu sein, beispielsweise eine Zufuhr der Arbeitsfluide zu der Brennstoffzelle, eine Abfuhr von aus der Brennstoffzelleneinheit austretenden Umsetzungsprodukten, eine Temperierung der Arbeitsfluide und/oder der Brennstoffzelleneinheit, eine Wärmerückgewinnung aus den Umsetzungsprodukten, eine Aufbereitung und/oder Vorverarbeitung der Arbeitsfluide, eine Verwertung von Restmengen an Brennstoff, welcher den Umsetzungsprodukten beigemengt ist, oder dergleichen.

Vorzugsweise umfasst die Oxidansleitungseinheit zumindest einen Anschluss für einen Einlass der Oxidanselektrode. Vorzugsweise umfasst die Oxidansleitungseinheit zumindest eine Oxidansquelle. Ohne darauf beschränkt zu sein, ist die Oxidansquelle beispielsweise als Ansaugelement für ein Umgebungsfluid, vorzugsweise Luft, und/oder als Anschluss für einen Fluidsammelbehälter und/oder für eine externe Versorgungsleitung ausgebildet. Vorzugsweise umfasst die Oxidansleitungseinheit zumindest ein Leitungselement zu einer Führung des oxidanshaltigen Arbeitsfluids. Das Leitungselement der Oxidansleitungseinheit ist, ohne darauf beschränkt zu sein, beispielsweise als Rohr, Schacht, Kanal, Schlauch oder sonstiges Element zu einer Führung eines Fluids ausgebildet. Vorzugsweise umfasst die Oxidansleitungseinheit zumindest ein als Oxidanszufuhr ausgebildetes Leitungselement, vorzugsweise zu einer Führung des oxidanshaltigen Arbeitsfluids von der Oxidansquelle zu dem Anschluss für den Einlass der Oxidanselektrode. Vorzugsweise ist das oxidanshaltige Arbeitsfluid als Umgebungsluft ausgebildet. Es ist aber auch denkbar, dass das oxidanshaltige Arbeitsfluid als Industriefluid, vorzugsweise mit einem dokumentierten Oxidansanteil, ausgebildet ist.

Vorzugsweise umfasst die Brennstoffleitungseinheit zumindest einen Anschluss für einen Einlass der Brennstoffelektrode. Vorzugsweise umfasst die Brennstoffleitungseinheit zumindest eine Brennstoffquelle. Ohne darauf beschränkt zu sein, ist die Brennstoffquelle beispielsweise als Anschluss für einen externen oder zur Brennstoffzellenvorrichtung gehörenden Brennstoffvorratsbehälter und/oder für eine externe Brennstoffversorgungsleitung ausgebildet. Vorzugsweise umfasst die Brennstoffleitungseinheit zumindest ein Leitungselement zu einer Führung des brennstoffhaltigen Arbeitsfluids. Das Leitungselement der Brennstoffleitungseinheit ist, ohne darauf beschränkt zu sein, beispielsweise als Rohr, Schacht, Kanal, Schlauch oder sonstiges Element zu einer Führung eines Fluids ausgebildet. Vorzugsweise umfasst die Brennstoffleitungseinheit zumindest ein als Brennstoffzufuhr ausgebildetes Leitungselement, vorzugsweise zu einer Führung des brennstoffhaltigen Arbeitsfluids von der Brennstoffquelle zu dem Anschluss für den Einlass der Brennstoffelektrode. Vorzugsweise umfasst die Brennstoffleitungseinheit zumindest ein als Rezirkulationsleitung ausgebildetes Leitungselement, vorzugsweise zu einer Rückführung des brennstoffhaltigen Arbeitsfluids von einem Anschluss der Brennstoffleitungseinheit für einen Auslass der Brennstoffelektrode in die Brennstoffzufuhr. Vorzugsweise ist das brennstoffhaltige Arbeitsfluid als Erdgas ausgebildet. Es ist auch denkbar, dass das brennstoffhaltige Arbeitsfluid als Hauptenergieträger andere Kohlenwasserstoffverbindungen und/oder Wasserstoff als Gemisch oder als Reinstoff umfasst.

Vorzugsweise ist das Inertfluid zumindest unter Betriebsbedingungen der Brennstoffzellenvorrichtung und/oder der Brennstoffzelleneinheit im chemischen Sinne stabiler und/oder weniger reaktiv als das oxidanshaltige Arbeitsfluid. Vorzugsweise ist das Inertfluid, zumindest im Vergleich mit dem oxidanshaltigen Arbeitsfluid, oxidansarm, besonders bevorzugt sauerstoffarm. Vorzugsweise ist das Inertfluid, zumindest im Vergleich mit dem oxidanshaltigen Arbeitsfluid, stickstoffreich und/oder edelgasreich. Optional umfasst das Inertfluid zumindest ein Reduktans, beispielsweise Wasserstoff. Vorzugsweise ist das Reduktans in gering konzentrierten Mengen beigemischt. Es ist auch technisch möglich, dass das Reduktans einen Hauptbestandteil und/oder den einzigen Bestandteil des Inertfluids bildet. Unter "gering konzentriert" soll vorzugsweise mit einem Masse- und/oder Volumenanteil von unter 10 %, bevorzugt von unter 5 %, besonders bevorzugt von unter 1 % verstanden werden. Ohne darauf beschränkt zu sein, ist das Inertfluid beispielsweise zu einer Spülung der Brennstoffelektrode und/oder einem Schutz der Brennstoffelektrode vor Oxidation und/oder zu einem Schutz vor einer unkontrollierten Umsetzung des Brennstoffs vorgesehen.

Vorzugsweise umfasst die Inerteinheit zumindest eine Brennstoffzelle, einen Brennstoffzellenstack und/oder einen Verbund mehrerer Brennstoffzellenstacks, welche/r vorzugsweise in einem Elektrolysemodus betreibbar sind/ist. Vorzugsweise umfasst die Inerteinheit zumindest eine Hochtemperaturbrennstoffzelle, beispielsweise eine Schmelzkarbonatbrennstoffzelle (MCFC) und/oder besonders bevorzugt zumindest eine Festoxidbrennstoffzelle (SOFC), welche vorzugsweise in einem Elektrolysemodus betreibbar ist. Alternativ oder zusätzlich umfasst die Inerteinheit zumindest eine Protonenaustauschmembran-Brennstoffzelle (PEMFC), eine Phosphorsäure-Brennstoffzelle (PAFC), eine Direktmethanol-Brennstoffzelle (DMFC), eine alkalische Brennstoffzelle (AFC) oder dergleichen. Vorzugsweise umfasst die Inerteinheit zumindest eine Anode, welche vorzugsweise während der Erzeugung des Inertfluids zu einem Kontakt mit zumindest einem Prozessfluid vorgesehen ist. Vorzugsweise umfasst die Inerteinheit zumindest eine Kathode, welche vorzugsweise während der Erzeugung des Inertfluids zu einem Kontakt mit zumindest einem weiteren Prozessfluid vorgesehen ist. Vorzugsweise ist die Inerteinheit dazu vorgesehen, unter Verwendung elektrischer Energie einen Ionentransport und/oder lonenaustausch zwischen dem Prozessfluid und dem weiteren Prozessfluid zu erzeugen. Vorzugsweise ist die Inerteinheit dazu vorgesehen, ein Oxidans, besonders bevorzugt Sauerstoff, des anodenseitigen Prozessfluids auf das kathodenseitige weitere Prozessfluid zu übertragen. Es ist technisch auch umsetzbar, dass die Inerteinheit dazu vorgesehen ist, ein Reduktans, beispielsweise Wasserstoff, des kathodenseitigen weiteren Prozessfluids auf das anodenseitige Prozessfluid zu übertragen, beispielsweise indem die Inerteinheit als Brennstoffzelle alternativ oder zusätzlich zumindest eine Protonenaustauschmembran-Brennstoffzelle (PEMFC) umfasst.

Vorzugsweise ist die Oxidansleitungseinheit zu einer Versorgung der Inerteinheit mit den Prozessfluiden vorgesehen. Vorzugsweise bilden das oxidanshaltige Arbeitsfluid und/oder ein weiteres Arbeitsfluid der Brennstoffzellenvorrichtung, vorzugsweise der Oxidansleitungseinheit, die Prozessfluide. Das weitere Arbeitsfluid kann, ohne darauf beschränkt zu sein, beispielsweise als das oxidanshaltige Arbeitsfluid in einem vorverarbeiteten Zustand, als weiteres oxidanshaltiges Arbeitsfluid aus einer weiteren Oxidansquelle der Oxidansleitungseinheit, als Fluidgemisch aus einer Rückleitung der Oxidansleitungseinheit von einem Anschluss für einen Auslass der Oxidanselektrode oder dergleichen ausgebildet sein. Vorzugsweise sind/ist das oxidanshaltige Arbeitsfluid und/oder das weitere Arbeitsfluid zumindest im Wesentlichen brennstofffrei ausgebildet. Unter einem "im Wesentlichen brennstofffreien" Fluid soll vorzugsweise verstanden werden, dass ein Brennstoff in dem Fluid höchstens gering konzentriert ist, bevorzugt höchstens als Spurengas und/oder Spurenelement vorkommt.

Durch die erfindungsgemäße Ausgestaltung der Brennstoffzellenvorrichtung kann vorteilhaft das Inertfluid bei Bedarf hergestellt werden. Vorteilhaft kann auf einen Vorratsbehälter für das Inertfluid verzichtet werden. Alternativ kann ein Zwischenspeicher vorteilhaft klein ausgebildet sein. Vorzugsweise kann die Brennstoffzellenvorrichtung vorteilhaft kompakt ausgebildet werden. Vorzugsweise kann ein Wartungsaufwand für die Brennstoffzellenvorrichtung vorteilhaft gering gehalten werden.

Weiter wird vorgeschlagen, dass die Oxidansleitungseinheit für den Kathodeneinlass und für den Anodeneinlass der Inerteinheit eine gemeinsame Zufuhrleitung aufweist. Vorzugsweise werden das Prozessfluid und das weitere Prozessfluid durch das oxidanshaltige Arbeitsfluid gebildet. Vorzugsweise ist die gemeinsame Zufuhrleitung fluidtechnisch zwischen der Oxidansquelle und der Inerteinheit angeordnet. Vorzugsweise umfasst die Oxidansleitungseinheit zumindest ein Verteilungselement, welches dazu vorgesehen ist, das oxidanshaltige Arbeitsfluid von der gemeinsamen Zufuhrleitung über den Kathodeneinlass auf die Kathode und über den Anodeneinlass auf die Anode der Inerteinheit zu verteilen. Es ist denkbar, dass die Inerteinheit ein Gehäuse umfasst, in welchem die zumindest eine Brennstoffzelle angeordnet ist, beispielsweise zu einer Temperaturregelung und/oder bei einem modularen Aufbau der Brennstoffzellenvorrichtung. Das Verteilungselement und/oder die gemeinsame Zufuhrleitung können/kann teilweise oder vollständig, innerhalb oder außerhalb des Gehäuses der Inerteinheit angeordnet sein. Es ist denkbar, dass das Verteilungselement und/oder die gemeinsame Zufuhrleitung zumindest teilweise von dem Gehäuse gebildet werden/wird. Es ist weiter denkbar, dass die Oxidansleitungseinheit zumindest ein Fluidstellelement und/oder ein Fluidmesselement umfasst, welches vorzugsweise innerhalb des Verteilelements angeordnet ist, um einen Fluidparameter, beispielsweise aber nicht beschränkt auf einen Volumenstrom und/oder einen Oxidansgehalt, des oxidanshaltigen Arbeitsfluids kathoden- und/oder anodenspezifisch einzustellen und/oder zu messen. Durch die erfindungsgemäße Ausgestaltung kann die Brennstoffzellenvorrichtung vorteilhaft bauteilarm ausgebildet werden. Vorzugsweise kann eine vorteilhaft kompakte, kostengünstige und/oder verschleißarme Brennstoffzellenvorrichtung zur Verfügung gestellt werden.

Weiterhin wird vorgeschlagen, dass eine Einspeisestelle der Brennstoffzellenvorrichtung für das Inertfluid in die Brennstoffleitungseinheit zwischen einem Reformer der Brennstoffleitungseinheit und einem Anschluss der Brennstoffleitungseinheit für die Brennstoffzelleneinheit angeordnet ist. Vorzugsweise ist die Einspeisestelle zwischen einem Auslass des Reformers und dem Anschluss für den Einlass der Brennstoffelektrode angeordnet. Es ist aber auch denkbar, dass die Einspeisestelle zwischen dem Anschluss für den Auslass der Brennstoffelektrode und einem Einlass des Reformers, beispielsweise in der Rezirkulationsleitung, angeordnet ist. Vorzugsweise umfasst die Brennstoffzellenvorrichtung zumindest ein als Inertleitung ausgebildetes Leitungselement. Vorzugsweise ist die Einspeisestelle mit einem Anodenauslass der Inerteinheit durch die Inertleitung fluidtechnisch verbunden. Vorzugsweise mündet die Inertleitung an der Einspeisestelle in die Brennstoffzufuhr. Es ist denkbar, dass die Brennstoffzellenvorrichtung an der Einspeisestelle ein Einspeiseelement, wie beispielsweise eine Düse, ein Ventil, eine Drosselklappe oder dergleichen, aufweist. Es ist denkbar, dass die Brennstoffzellenvorrichtung in der Inertleitung ein Rückschlagventil umfasst, vorzugsweise zu einer Verhinderung eines Eindringens des brennstoffhaltigen Arbeitsfluids in die Inerteinheit. Durch die erfindungsgemäße Ausgestaltung kann eine Leitungsstrecke, die das Inertfluid von der Einspeisestelle bis zu seinem vorgesehen Einsatzort führt, vorteilhaft gering gehalten werden. Vorzugsweise kann eine Umstellung eines Arbeitsbetriebs der Brennstoffzellenvorrichtung vorteilhaft schnell durchgeführt werden.

Ferner wird vorgeschlagen, dass die Inerteinheit zumindest ein Leistungsreglerelement zu einer Einstellung einer Restoxidansmenge in dem Inertfluid umfasst. Vorzugsweise ist das Leistungsreglerelement dazu vorgesehen, eine von der Inerteinheit aufgenommene elektrische Leistung zu steuern oder zu regeln. Vorzugsweise ist das Leistungsreglerelement dazu vorgesehen, eine Elektrodenspannung zwischen Anode und Kathode zu steuern oder zu regeln und/oder einen mit dem Ionentransport assoziierten Ladungsstrom einzustellen. Vorzugsweise ist das Leistungsreglerelement dazu vorgesehen, eine Transportmenge und/oder eine Transportrate des Oxidans und/oder des Reduktans zwischen der Anode und der Kathode zu steuern oder zu regeln. Vorzugsweise ist das Leistungsreglerelement dazu vorgesehen, eine Zusammensetzung des Inertfluids, vorzugsweise einen reaktiven und/oder einen inerten Anteil des Inertfluids, zu steuern oder zu regeln. Es ist denkbar, dass die Brennstoffzellenvorrichtung zumindest ein Oxidansmesselement zu einer Erfassung einer Restoxidansmenge in dem Inertfluid umfasst, welches vorzugsweise in der Inertleitung angeordnet ist.

Vorzugsweise ist das Leistungsreglerelement dazu vorgesehen, einen Messwert des Oxidansmesselements als Regelgröße und die durch die Inerteinheit aufgenommene elektrische Leistung, den Ladungsstrom und/oder die Elektrodenspannung als Stellgröße zu verwenden. Zusätzlich oder alternativ umfasst die Brennstoffzellenvorrichtung eine Bypassleitung, welche die Inerteinheit umgeht, sodass eine Restoxidansmenge über ein Mischventil der Brennstoffzellenvorrichtung in der Inertleitung einstellbar ist. Durch die erfindungsgemäße Ausgestaltung kann vorteilhaft mit dem Inertfluid eine Oxidansmenge kontrolliert in die Brennstoffleitungseinheit und/oder die Brennstoffzelleneinheit eingespeist werden. Vorzugsweise können Kohlenstoffablagerungen in dem Reformer und/oder in der Brennstoffzelleneinheit gezielt entfernt werden.

Des Weiteren wird vorgeschlagen, dass die Brennstoffzellenvorrichtung zumindest eine Wärmeübertragereinheit zu einem Wärmeaustausch zwischen der Brennstoffzelleneinheit und der Inerteinheit umfasst. Vorzugsweise ist die Wärmeübertragereinheit zu einer Wärmeübertragung von der Brennstoffzelleneinheit auf die Inerteinheit vorgesehen. Alternativ oder zusätzlich ist die Wärmeübertragereinheit zu einer Wärmeübertragung von der Inerteinheit auf die Brennstoffzelleneinheit vorgesehen. Beispielsweise umfasst die Wärmeübertragereinheit zumindest ein Oxidansabgaswärmeübertragerelement, welches innerhalb der Oxidansleitungseinheit, vorzugsweise in der Oxidanszufuhr und/oder in der gemeinsamen Zufuhrleitung angeordnet ist und vorzugsweise mit dem Anschluss für einen der Auslässe der Brennstoffzelleneinheit fluidtechnisch verbunden ist. Beispielsweise ist das Oxidansabgaswärmeübertragerelement als Plattenwärmeübertrager, als Rohrbündelwärmeübertrager, als Mantelrohrwärmeübertrager oder dergleichen ausgebildet. Beispielsweise umfasst die Brennstoffzelleneinheit eine gemeinsame, vorzugsweise thermisch isolierende, Gehäuseeinheit, in welcher die Inerteinheit angeordnet ist und welche eine Montagestelle für die Brennstoffzelleneinheit umfasst, welche vorzugsweise über eine Zirkulation eines Wärmeträgers innerhalb der Gehäuseeinheit und/oder über zumindest ein Wärmerohr und/oder eine andere Wärmebrücke mit der Inerteinheit thermisch verbunden ist. Es ist vorzugsweise denkbar, dass die Montagestelle in die Inerteinheit integriert ist, vorzugsweise zu einer Bildung eines kompakten Stapels aus Inerteinheit und Brennstoffzelleneinheit. Durch die erfindungsgemäße Ausgestaltung können Betriebskosten für die Brennstoffzellenvorrichtung zur Erreichung und/oder Aufrechterhaltung einer Betriebstemperatur der Inerteinheit vorteilhaft gering gehalten werden. Vorzugsweise können thermomechanische Spannungen innerhalb der Brennstoffzellenvorrichtung und/oder zwischen der Brennstoffzellenvorrichtung und der Brennstoffzelleneinheit vorteilhaft gering gehalten werden.

Darüber hinaus wird vorgeschlagen, dass die Brennstoffzellenvorrichtung zumindest eine Speichereinheit zu einer Zwischenspeicherung des mittels der Inerteinheit erstellten Inertfluids aufweist. Vorzugsweise ist die Speichereinheit fluidtechnisch an die Inertleitung angeschlossen. Vorzugsweise umfasst die Speichereinheit ein Speichervolumen, um zumindest einen Einsatz des Inertfluids vollständig abzudecken, und/oder ein Puffervolumen, um bei einer Herstellung des Inertfluids direkt während eines Einsatzes des Inertfluids Angebot und Bedarf an Inertfluid auszugleichen. Vorzugsweise ist die Speichereinheit, beispielsweise über ein Dreiwegeventil, von der Inerteinheit aus betrachtet fluidtechnisch parallel zu der Einspeisestelle angeordnet. Vorzugsweise umfasst die Speichereinheit einen Fluidsammelbehälter zu einer Bereitstellung des Speichervolumens und/oder des Puffervolumens. Alternativ sind die Inerteinheit, die Speichereinheit und die Einspeisestelle, vorzugsweise in dieser Reihenfolge, fluidtechnisch in Reihe geschaltet. Vorzugsweise ist es denkbar, dass die Speichereinheit zur Bereitstellung eines Speichervolumens und/oder eines Puffervolumens ein Leitungselement umfasst, das gegenüber der Inertleitung einen vergrößerten Leitungsquerschnitt aufweist. Alternativ oder zusätzlich ist es denkbar, dass das Leitungselement der Speichereinheit einen mäandrierenden, spiralförmigen oder dergleichen Verlauf aufweist, um das Speichervolumen und/oder das Puffervolumen bereitzustellen. Bei einer Ausgestaltung der Brennstoffzellenvorrichtung zu einer Versorgung von mehreren, insbesondere aber nicht eingeschränkt auf unabhängig voneinander betreibbaren, Brennstoffzelleneinheiten, kann die Speichereinheit zumindest einen zentralen Fluidsammelbehälter, der vorzugsweise dazu vorgesehen ist, den Bedarf jeder Brennstoffzelleneinheit an Inertfluid abzudecken, und/oder zumindest zwei lokale Fluidsammelbehälter umfassen, welche spezifischen Brennstoffzelleneinheiten zugeordnet sind. Vorzugsweise umfasst die Speichereinheit zumindest ein Messelement, um einen Speicherparameter des Speichervolumens und/oder des Puffervolumens zu erfassen, wie beispielsweise einen Füllstand, einen Druck, eine Temperatur oder dergleichen. Durch die erfindungsgemäße Ausgestaltung kann eine Versorgung der Brennstoffzelleneinheit und/oder der Brennstoffleitungseinheit mit Inertfluid vorteilhaft zuverlässig gestaltet werden. Vorzugsweise kann die Inerteinheit vorteilhaft gleichzeitig mit der Brennstoffzelleneinheit betrieben werden. Vorzugsweise kann die Brennstoffzelleneinheit vorteilhaft energieeffizient betrieben werden.

Weiter wird vorgeschlagen, dass die Brennstoffzellenvorrichtung eine Verteilungseinheit zu einer Einstellung einer Einspeisestelle für das Inertfluid in die Brennstoffleitungseinheit umfasst. Vorzugsweise umfasst die Brennstoffzellenvorrichtung zumindest zwei Einspeisestellen für das Inertfluid. Vorzugsweise ist die Verteilungseinheit dazu vorgesehen, eine der Einspeisestellen einzustellen und/oder das Inertfluid unter den Einspeisestellen aufzuteilen. Beispielsweise umfasst die Brennstoffzellenvorrichtung eine Einspeisestelle stromaufwärts des Anschlusses für die Brennstoffelektrode. Beispielsweise umfasst die Brennstoffzellenvorrichtung eine Einspeisestelle fluidtechnisch stromaufwärts des Reformers der Brennstoffleitungseinheit, vorzugsweise zwischen Reformer und Brennstoffquelle und/oder in der Rezirkulationsleitung. Beispielsweise umfasst die Brennstoffzellenvorrichtung eine Einspeisestelle fluidtechnisch stromaufwärts eines Nachbrenners der Brennstoffzellenvorrichtung und vorzugsweise stromabwärts eines der Anschlüsse für die Brennstoffzelleneinheit. Beispielsweise umfasst die Verteilungseinheit ein Mehrwegeventil, um die verschiedenen Einspeisestellen einzustellen. Alternativ oder zusätzlich ist jeder Einspeisestelle zumindest ein Sperrventil der Verteilungseinheit zugeordnet. Durch die erfindungsgemäße Ausgestaltung kann das Inertfluid vorteilhaft zielgerichtet eingespeist werden. Vorzugsweise kann das Inertfluid vorteilhaft simultan an mehreren Stellen eingespeist werden. Vorzugsweise kann das Inertfluid vorteilhaft schnell in der Brennstoffleitungseinheit verteilt werden.

Weiterhin wird ein Brennstoffzellensystem mit einer erfindungsgemäßen Brennstoffzellenvorrichtung mit zumindest einer Brennstoffzelleneinheit vorgeschlagen. Vorzugsweise ist die Brennstoffzelleneinheit fest, besonders bevorzugt stoffschlüssig, mit der Brennstoffzellenvorrichtung verbunden. Vorzugsweise sind die Einlässe und/oder die Auslässe der Brennstoffzelleneinheit fest, besonders bevorzugt stoffschlüssig, mit den Anschlüssen der Brennstoffzellenvorrichtung verbunden. Es ist aber auch denkbar, dass die Brennstoffzelleneinheit modular ausgebildet ist, wobei die Einlässe und/oder die Auslässe der Brennstoffzelleneinheit an den Anschlüssen der Brennstoffzellenvorrichtung zerstörungsfrei lösbar angeschlossen sind. Vorzugsweise umfassen die Brennstoffzelleneinheit und die Brennstoffzellenvorrichtung, vorzugsweise die Inerteinheit, denselben Typ Brennstoffzellen. Vorzugsweise ist die Inerteinheit in Abhängigkeit von einem Bedarf der Brennstoffzelleneinheit an Inertfluid ausgelegt. Vorzugsweise ist die Inerteinheit, vorzugsweise zumindest die Gesamteinheit an Brennstoffzellen der Inerteinheit, kleiner als die Brennstoffzelleneinheit. Vorzugsweise sind/ist das Speichervolumen und/oder das Puffervolumen der Speichereinheit klein gegenüber einem Volumen an benötigtem Inertfluid, während eines Betriebs des Brennstoffzellensystems, vorzugsweise der Brennstoffzellenvorrichtung und/oder der Brennstoffzelleneinheit. Bei einer Ausgestaltung mit mehreren Brennstoffzelleneinheiten, welche insbesondere, ohne darauf beschränkt zu sein, voneinander unabhängig betreibbar sind, weist das Brennstoffzellensystem für zumindest zwei Brennstoffzelleneinheiten vorzugsweise je eine spezifische Brennstoffzellenvorrichtung auf. Alternativ umfasst die Brennstoffzellenvorrichtung ein weiteres Verteilungselement zu einer Aufteilung der Arbeitsfluide und/oder des Inertfluids auf die zumindest zwei Brennstoffzelleneinheiten. Durch die erfindungsgemäße Ausgestaltung kann ein vorteilhaft kompaktes, wartungsarmes und/oder energieeffizientes Brennstoffzellensystem bereitgestellt werden.

Ferner wird ein Verfahren zu einem Betrieb einer erfindungsgemäßen Brennstoffzellenvorrichtung und/oder eines erfindungsgemäßen Brennstoffzellensystems vorgeschlagen. Vorzugsweise führt und/oder fördert die Oxidansleitungseinheit während eines regulären Betriebs der Brennstoffzellenvorrichtung das oxidanshaltige Arbeitsfluid zu dem Anschluss für den Einlass der Oxidanselektrode der Brennstoffzelleneinheit. Vorzugsweise führt und/oder fördert die Brennstoffleitungseinheit während eines regulären Betriebs der Brennstoffzellenvorrichtung das brennstoffhaltige Arbeitsfluid zu dem Anschluss für den Einlass der Brennstoffelektrode der Brennstoffzelleneinheit. Vorzugsweise setzt die Brennstoffzelleneinheit während eines regulären Betriebs der Brennstoffzellenvorrichtung und/oder der Brennstoffzelleneinheit das brennstoffhaltige Arbeitsfluid und das oxidanshaltige Arbeitsfluid unter einer Gewinnung elektrischer Energie um. Vorzugsweise führt und/oder fördert die Brennstoffzellenvorrichtung in zumindest einem Verfahrensschritt das oxidanshaltige Arbeitsfluid zu der Inerteinheit. Vorzugsweise teilt die Oxidansleitungseinheit das oxidanshaltige Arbeitsfluid zwischen der Anode und der Kathode der Inerteinheit auf. Vorzugsweise induziert die Inerteinheit in zumindest einem Verfahrensschritt unter einer Verwendung elektrischer Energie einen Ionentransport zwischen dem oxidanshaltigen Arbeitsfluid an der Kathode und dem oxidanshaltigen Arbeitsfluid an der Anode. Vorzugsweise induziert die Inerteinheit einen Transport eines Oxidans des oxidanshaltigen Arbeitsfluids von der Anode zu der Kathode. Vorzugsweise erzeugt die Inerteinheit an der Anode das Inertfluid, durch einen Export des Oxidans zu der Kathode. Vorzugsweise erzeugt die Inerteinheit an der Kathode ein, vorzugsweise im Vergleich mit dem oxidanshaltigen Arbeitsfluid, ein oxidansreiches Arbeitsfluid. Vorzugsweise speist die Oxidansleitungseinheit das oxidansreiche Arbeitsfluid in die Oxidanszufuhr und führt und/oder fördert es vorzugsweise zu dem Anschluss für den Einlass der Oxidanselektrode der Brennstoffzelleneinheit. Es ist denkbar, dass die Oxidansleitungseinheit über ein Dosierventil und/oder einen Bypass ein Mischungsverhältnis des oxidanshaltigen und des oxidansreichen Arbeitsfluids reguliert, vorzugsweise zu einer Einstellung eines Oxidansgehalts des Arbeitsfluids an der Oxidanselektrode. Vorzugsweise speist die Brennstoffzellenvorrichtung das Inertfluid von der Inerteinheit in die Speichereinheit und/oder in die Brennstoffleitungseinheit und/oder von der Speichereinheit in die Brennstoffleitungseinheit ein. Durch die erfindungsgemäße Ausgestaltung des Verfahrens kann vorteilhaft das Inertfluid bei Bedarf bereitgestellt werden. Vorzugsweise kann vorteilhaft auf einen Vorratsbehälter für das Inertfluid verzichtet werden und/oder auf einen vorteilhaft kleinen Zwischenspeicher beschränkt werden. Vorzugsweise kann ein Wartungsaufwand für die Brennstoffzellenvorrichtung vorteilhaft gering gehalten werden.

Des Weiteren wird vorgeschlagen, dass in zumindest einem Verfahrensschritt eine Restoxidansmenge in dem Inertfluid auf einen Sollwert gesteuert oder geregelt wird. Vorzugsweise wird in zumindest einem Verfahrensschritt mittels des Oxidansmesselements eine Restoxidansmenge in dem Inertfluid, vorzugsweise in der Inertleitung erfasst. Vorzugsweise stellt das Leistungsreglerelement eine Leistungskenngröße, vorzugsweise die aufgenommene elektrische Leistung, die Elektrodenspannung und/oder den Ladungsstom, der Inerteinheit in Abhängigkeit von einem Messwert des Oxidansmesselements ein. Vorzugsweise erzeugt die Inerteinheit das Inertfluid mit einer kontrollierten Restoxidansmenge. Vorzugsweise wird das Inertfluid mit der kontrollierten Restoxidansmenge in die Brennstoffleitungseinheit eingespeist. Vorzugsweise wird das Inertfluid mit der Restoxidansmenge stromaufwärts des Reformers, vorzugsweise in die Brennstoffzufuhr und/oder die Rezirkulationsleitung, eingespeist. Beispielsweise führt und/oder fördert die Brennstoffzellenvorrichtung das Inertfluid mit der kontrollierten Restoxidansmenge während eines Wartungsbetriebs in den Reformer und/oder in die Brennstoffzelleneinheit, beispielsweise um Kohlenstoffablagerungen zu beseitigen. Beispielsweise führt und/oder fördert die Brennstoffzellenvorrichtung das Inertfluid mit der kontrollierten Restoxidansmenge während eines Startvorgangs der Brennstoffzelleneinheit und/oder der Brennstoffzellenvorrichtung in den Reformer, um eine partielle Oxidation, vor allem eine katalytisch partielle Oxidation (CPOX), des brennstoffhaltigen Arbeitsfluids durchzuführen. Durch die erfindungsgemäße Ausgestaltung kann vorteilhaft mit dem Inertfluid eine Oxidansmenge kontrolliert in die Brennstoffleitungseinheit und/oder in die Brennstoffzelleneinheit eingespeist werden. Vorzugsweise kann ein vorteilhaft großer Funktionsumfang der Brennstoffzellenvorrichtung mit einem vorteilhaft geringen Anteil an Bauteilen erreicht werden.

Darüber hinaus wird vorgeschlagen, dass in zumindest einem Verfahrensschritt ein Oxidans aus dem Inertfluid zumindest im Wesentlichen vollständig ausgetrieben wird. Unter einen Stoff "im Wesentlichen vollständig" austreiben soll zumindest zu mehr als 99 %, bevorzugt zu mehr als 99,9 %, besonders bevorzugt zu mehr als 99,99 %, überaus bevorzugt zu mehr als 99,999 %, bezogen auf eine absolute Masse des Stoffs zu Beginn der Austreibung verstanden werden. Vorzugsweise wird das Inertfluid in zumindest einem Verfahrensschritt mit einem relativen Masseanteil und/oder Volumenanteil des Oxidans von weniger als 1 %, bevorzugt weniger als 0,1 %, besonders bevorzugt von weniger als 0,01 %, überaus bevorzugt von weniger als 0,001 % in die Brennstoffleitungseinheit eingespeist. Vorzugsweise liegt eine Restoxidansmenge in dem Inertfluid nach der Austreibung unterhalb einer Auflösung des Oxidansmesselements. Beispielsweise führt oder fördert die Brennstoffzellenvorrichtung das zumindest im Wesentlichen von dem Oxidans befreite Inertfluid während eines Standbybetriebs und/oder einer Aufheizphase der Brennstoffzelleneinheit in die Brennstoffelektrode. Vorzugsweise wird in der Speichereinheit das zumindest im Wesentlichen von dem Oxidans befreite Inertfluid zwischengespeichert. Vorzugsweise ist es denkbar, dass das Inertfluid mit dem kontrollierten Oxidansanteil durch ein Mischventil erstellt wird, das das oxidanshaltige Arbeitsfluid mit dem in der Speichereinheit zwischengespeicherten Inertfluid vermengt. Es ist auch denkbar, dass das zumindest im Wesentlichen vollständig von dem Oxidans befreite Inertfluid und das Inertfluid mit dem kontrollierten Oxidansanteil in unterschiedlichen Speichervolumina und/oder Puffervolumina der Speichereinheit zwischengespeichert wird. Durch die erfindungsgemäße Ausgestaltung kann ein Inertfluid zum Schutz der Brennstoffzelleneinheit während eines Betriebs der Brennstoffzelleneinheit hergestellt werden.

Die erfindungsgemäße Brennstoffzellenvorrichtung, das erfindungsgemäße Brennstoffzellensystem und/oder das erfindungsgemäße Verfahren sollen/soll hierbei nicht auf die oben beschriebene Anwendung und Ausführungsform beschränkt sein. Vorzugsweise können/kann die erfindungsgemäße Brennstoffzellenvorrichtung, das erfindungsgemäße Brennstoffzellensystem und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Schaltschema eines erfindungsgemäßen Brennstoffzellensystems mit einer erfindungsgemäßen Brennstoffzellenvorrichtung,
- Fig. 2: eine schematische Darstellung eines erfindungsgemäßen Verfahrens und
- Fig. 3: ein Schaltschema eines weiteren erfindungsgemäßen Brennstoffzellensystems mit einer weiteren erfindungsgemäßen Brennstoffzellenvorrichtung.

### Beschreibung der Ausführungsbeispiele

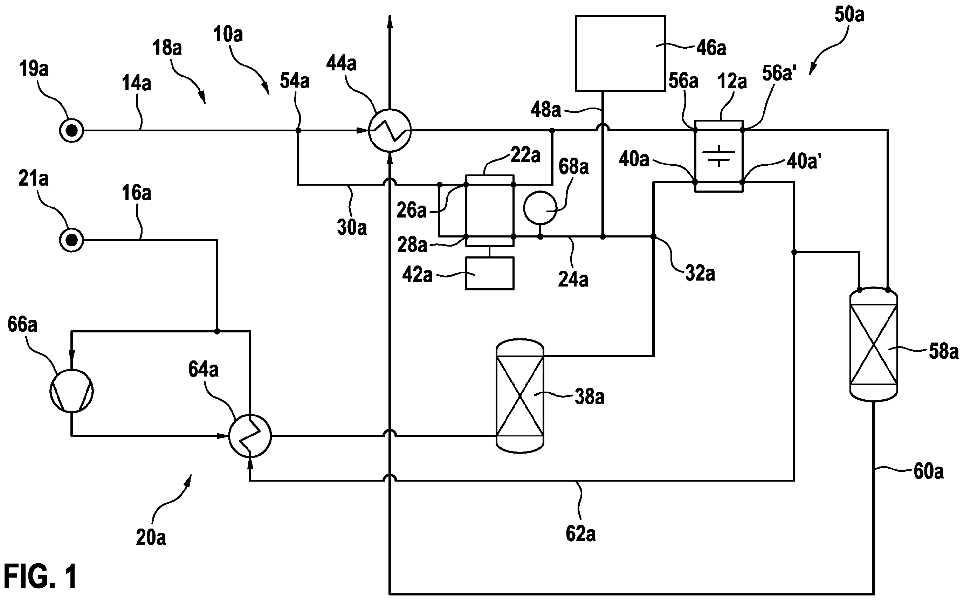

Figur 1 zeigt ein Brennstoffzellensystem 50a. Das Brennstoffzellensystem 50a umfasst zumindest eine Brennstoffzellenvorrichtung 10a. Das Brennstoffzellensystem 50a umfasst zumindest eine Brennstoffzelleneinheit 12a. Vorzugsweise ist die Brennstoffzelleneinheit 12a als Hochtemperaturbrennstoffzelleneinheit ausgebildet. Vorzugsweise umfasst die Brennstoffzelleneinheit 12a zumindest einen Brennstoffelektrode. Vorzugsweise umfasst die Brennstoffzelleneinheit 12a zumindest eine Oxidanselektrode. Die Brennstoffzellenvorrichtung 10a ist zu einer Versorgung der Brennstoffzelleneinheit 12a mit Arbeitsfluiden 14a, 16a vorgesehen.

Die Brennstoffzellenvorrichtung 10a umfasst zumindest eine Oxidansleitungseinheit 18a. Die Oxidansleitungseinheit 18a ist zu einer Handhabung eines oxidanshaltigen Arbeitsfluids 14a vorgesehen. Vorzugsweise ist die Oxidansleitungseinheit 18a zu einer Versorgung der Oxidanselektrode der Brennstoffzelleneinheit 12a vorgesehen. Vorzugsweise ist das oxidanshaltige Arbeitsfluid 14a als Luft, vorzugsweise Umgebungsluft, ausgebildet. Vorzugsweise umfasst das oxidanshaltige Arbeitsfluid 14a als Oxidans Sauerstoff. Vorzugsweise umfasst die Oxidansleitungseinheit 18a eine Oxidansquelle 19a. Es ist denkbar, dass die Oxidansquelle 19a zumindest ein Fluidförderelement zu einer Förderung des oxidanshaltigen Arbeitsfluids 14a, beispielsweise zu einer Ansaugung von Umgebungsluft, umfasst. Vorzugsweise umfasst die Oxidansleitungseinheit 18a zumindest einen Anschluss 56a für einen Einlass der Oxidanselektrode. Vorzugsweise umfasst die Oxidansleitungseinheit 18a zumindest ein als Oxidanszufuhr ausgebildetes Leitungselement von der Oxidansquelle 19a zu dem Anschluss 56a für den Einlass der Oxidanselektrode. Vorzugsweise umfasst die Oxidansleitungseinheit 18a zumindest eine Wärmeübertragereinheit 44a. Vorzugsweise ist die Wärmeübertragereinheit 44a fluidtechnisch in der Oxidanszufuhr angeordnet, vorzugsweise zwischen der Oxidansquelle 19a und dem Anschluss 56a für den Einlass der Oxidanselektrode. Vorzugsweise ist an die Wärmeübertragereinheit 44a fluidtechnisch eine Abfuhrleitung 60a angeschlossen. Vorzugsweise ist die Wärmeübertragereinheit 44a zu einer Übertragung von Wärme von der Abfuhrleitung 60a auf die Oxidanszufuhr vorgesehen.

Die Brennstoffzellenvorrichtung 10a umfasst zumindest eine Brennstoffleitungseinheit 20a. Die Brennstoffleitungseinheit 20a ist zu einer Handhabung eines brennstoffhaltigen Arbeitsfluids 16a vorgesehen. Vorzugsweise ist die Brennstoffleitungseinheit 20a zu einer Versorgung der Brennstoffelektrode der Brennstoffzelleneinheit 12a mit dem brennstoffhaltigen Arbeitsfluid 16a vorgesehen. Beispielsweise umfasst das brennstoffhaltige Arbeitsfluid 16a als Brennstoff Erdgas. Vorzugsweise umfasst die Brennstoffleitungseinheit 20a zumindest eine Brennstoffquelle 21a. Die Brennstoffleitungseinheit 20 umfasst zumindest einen Anschluss 40a für die Brennstoffzelleneinheit 12a, vorzugsweise für einen Einlass der Brennstoffelektrode der Brennstoffzelleneinheit 12a. Vorzugsweise umfasst die Brennstoffleitungseinheit 20a zumindest ein als Brennstoffzufuhr ausgebildetes Leitungselement von der Brennstoffquelle 21a zu dem Anschluss 40a für den Einlass der Brennstoffelektrode. Optional umfasst die Brennstoffquelle 21a zumindest ein Fluidförderelement zu einer Förderung des brennstoffhaltigen Arbeitsfluids 16a, beispielsweise zu einem Ansaugen aus einer Pipeline und/oder einem Vorratsbehälter. Die Brennstoffleitungseinheit 20 umfasst zumindest einen Reformer 38a. Vorzugsweise ist der Reformer 38a fluidtechnisch zwischen dem Anschluss 40a für den Einlass der Brennstoffelektrode und der Brennstoffquelle 21a angeordnet.

Optional umfasst die Brennstoffleitungseinheit 20a zumindest eine Rezirkulationsleitung 62a. Vorzugsweise ist die Rezirkulationsleitung 62a fluidtechnisch an einen Anschluss 40a' für einen Auslass der Brennstoffzellenelektrode der Brennstoffzelleneinheit 12a angeschlossen. Vorzugsweise mündet die Rezirkulationsleitung 62a zwischen der Brennstoffquelle 21a und dem Reformer 38a in die Brennstoffzufuhr. Vorzugsweise umfasst die Rezirkulationsleitung 62a eine Fluidfördereinheit 66a und/oder ein Dosierventil zu einer Einstellung einer Rezirkulationsrate. Vorzugsweise umfasst die Brennstoffleitungseinheit 20a zumindest eine weitere Wärmeübertragereinheit 64a. Vorzugsweise ist die weitere Wärmeübertragereinheit 64a fluidtechnisch in der Rezirkulationsleitung 62a angeordnet. Vorzugsweise ist die weitere Wärmeübertragereinheit 64a fluidtechnisch in der Brennstoffzufuhr angeordnet. Vorzugsweise ist die weitere Wärmeübertragereinheit 64a zu einer Wärmeübertragung von der Rezirkulationsleitung 62a auf die Brennstoffzufuhr vorgesehen. Vorzugsweise ist die weitere Wärmeübertragereinheit 64a fluidtechnisch in der Brennstoffzufuhr zwischen der Fluidfördereinheit 66a und dem Reformer 38a angeordnet.

Die Brennstoffzellenvorrichtung 10a umfasst zumindest eine Inerteinheit 22a. Die Inerteinheit 22a ist zu einer Einspeisung zumindest eines Inertfluids 24a in die Brennstoffleitungseinheit 20a vorgesehen. Vorzugsweise ist das Inertfluid 24a als oxidansarmes Gasgemisch, vorzugsweise im Vergleich mit dem oxidanshaltigen Arbeitsfluid 14a ausgebildet. Vorzugsweise ist das Inertfluid 24a als stickstoffreiches Gasgemisch, bevorzugt im Vergleich mit dem oxidanshaltigen Arbeitsfluid 14a, ausgebildet. Die Inerteinheit 22a umfasst zumindest eine Brennstoffzelle zu einer Erzeugung des Inertfluids 24a. Vorzugsweise umfasst die Inerteinheit 22a zumindest eine Anode. Vorzugsweise umfasst die Inerteinheit 22a zumindest eine Kathode. Die Inerteinheit 22a umfasst zumindest einen Kathodeneinlass 26a. Die Inerteinheit 22a umfasst zumindest einen Anodeneinlass 28a. Der Kathodeneinlass 26a und der Anodeneinlass 28a sind fluidtechnisch an die Oxidansleitungseinheit 18a angeschlossen. Vorzugsweise umfasst die Oxidansleitungseinheit 18a ein als Verzweigung 54a ausgebildetes Leitungselement. Vorzugsweise ist die Verzweigung 54a in der Oxidanszufuhr, vorzugsweise zwischen der Oxidansquelle 19a und der Wärmeübertragereinheit 44a, angeordnet. Die Oxidansleitungseinheit 18a weist für den Kathodeneinlass 26a und für den Anodeneinlass 28a der Inerteinheit 22a eine gemeinsame Zufuhrleitung 30a auf. Vorzugsweise ist die gemeinsame Zufuhrleitung 30a fluidtechnisch an die Oxidanszufuhr, vorzugsweise über die Verzweigung 54a, angeschlossen. Vorzugsweise umfasst die Oxidansleitungseinheit 18a zumindest ein als Oxidansabfuhr ausgebildetes Leitungselement. Vorzugsweise ist die Oxidansabfuhr an einem Kathodenauslass der Inerteinheit 22a angeschlossen. Vorzugsweise mündet die Oxidansabfuhr ausgehend von der Inerteinheit 22a in der Oxidanszufuhr, vorzugsweise zwischen dem Anschluss 56a für die Oxidanselektrode und der Wärmeübertragereinheit 44a.

Vorzugsweise umfasst die Brennstoffzellenvorrichtung 10a zumindest ein als Inertleitung ausgebildetes Leitungselement. Vorzugsweise ist die Inertleitung an einem Anodenauslass der Inerteinheit 22a fluidtechnisch angeschlossen. Vorzugsweise mündet die Inertleitung in die Brennstoffleitungseinheit 20a. Die Brennstoffzellenvorrichtung 10a umfasst zumindest eine Einspeisestelle 32a, vorzugsweise der Inertleitung, für das Inertfluid 24a in die Brennstoffleitungseinheit 20a. Die Einspeisestelle 32a ist zwischen dem Reformer 38a und dem Anschluss 40a für die Brennstoffzelleneinheit 12a angeordnet. Die Brennstoffzellenvorrichtung 10a umfasst zumindest eine Speichereinheit 46a. Die Speichereinheit 46a ist zu einer Zwischenspeicherung des mittels der Inerteinheit 22a erstellten Inertfluids 24a vorgesehen. Vorzugsweise weist die Brennstoffzellenvorrichtung 10a eine Verteilungseinheit 48a auf. Vorzugsweise umfasst die Verteilungseinheit 48a die Inertleitung. Vorzugsweise umfasst die Verteilungseinheit 48a zumindest ein als Speicherleitung ausgebildetes Leitungselement. Vorzugsweise ist die Speichereinheit 46a über die Speicherleitung fluidtechnisch an dem Anodenauslass der Inerteinheit 22a angeschlossen. Vorzugsweise ist die Verteilungseinheit 48a dazu vorgesehen, beispielsweise mittels eines Dreiwegeventils der Verteilungseinheit 48a, das Inertfluid 24a von der Inerteinheit 22a in die Speichereinheit 46a und/oder direkt zu der Einspeisestelle 32a zu führen. Vorzugsweise ist die Verteilungseinheit 48a dazu vorgesehen, beispielsweise mittels des Dreiwegeventils der Verteilungseinheit 48a, das Inertfluid 24a von der Speichereinheit 46a zu der Einspeisestelle 32a zu führen.

Die Inerteinheit 22a umfasst zumindest ein Leistungsreglerelement 42a. Das Leistungsreglerelement 42a ist zu einer Einstellung einer Restoxidansmenge in dem Inertfluid 24a vorgesehen. Vorzugweise umfasst die Inerteinheit 22a zumindest ein Oxidansmesselement 68a. Vorzugsweise weist das Oxidansmesselement 68a eine Messstelle in der Inertleitung und/oder an dem Anodenausgang der Inerteinheit 22a auf.

Vorzugsweise umfasst die Brennstoffzellenvorrichtung 10a zumindest einen Nachbrenner 58a. Vorzugsweise umfasst die Brennstoffzellenvorrichtung 10a zumindest die Abfuhrleitung 60a, vorzugsweise zu einer Abführung von Umsetzungsprodukten der Brennstoffzelleneinheit 12a und/oder des Nachbrenners 58a. Vorzugsweise ist die Abfuhrleitung 60a fluidtechnisch an einem Auslass des Nachbrenners 58a angeschlossen. Vorzugsweise ist ein Einlass des Nachbrenners 58a fluidtechnisch mit dem Anschluss 40a' des Auslasses der Brennstoffelektrode verbunden. Vorzugsweise ist ein weiterer Einlass des Nachbrenners 58a fluidtechnisch mit einem Anschluss 56a' des Auslasses der Brennstoffelektrode verbunden. Es ist denkbar, dass der Nachbrenner 58a und/oder die Abfuhrleitung 60a, beispielsweise im Zuge eines Thermomanagements, in die Brennstoffleitungseinheit 20a und/oder in die Oxidansleitungseinheit 18a integriert ausgebildet sind.

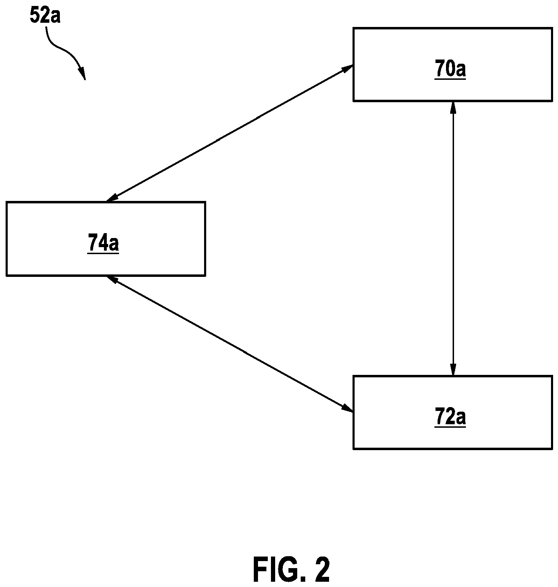

Figur 2 zeigt ein Verfahren 52a. Das Verfahren 52a ist zu einem Betrieb der Brennstoffzellenvorrichtung 10a und/oder des Brennstoffzellensystems 50a vorgesehen. Vorzugsweise umfasst das Verfahren 52a zumindest einen Standbybetrieb 70a. In dem Standbybetrieb 70a blockiert die Brennstoffquelle 21a eine Zuführung des brennstoffhaltigen Arbeitsfluids 16a zu der Brennstoffzelleneinheit 12a. Vorzugsweise wird während des Standbybetriebs 70a die Brennstoffzelleneinheit 12a von der Brennstoffzellenvorrichtung 10a auf einer Betriebstemperatur gehalten oder auf eine Standbytemperatur eingestellt. Zu einem Schutz der Brennstoffelektrode der Brennstoffzelleneinheit 12a vor einer Oxidation, beispielsweise durch in die Vorrichtung eindringende Umgebungsluft, wird die Brennstoffleitungseinheit 20a und/oder die Brennstoffzelleneinheit 12a mit dem Inertfluid 24a gefüllt. Vorzugsweise versorgt die Oxidansleitungseinheit 18a die Inerteinheit 22a kathodenseitig und anodenseitig mit dem oxidanshaltigen Arbeitsfluid 14a. Vorzugsweise transportiert die Inerteinheit 22a ein Oxidans von der Anode zu der Kathode ab. Zumindest während des Standbybetriebs 70a wird das Oxidans aus dem Inertfluid 24a zumindest im Wesentlichen vollständig ausgetrieben. Vorzugsweise entsteht durch einen Abtransport des Oxidans an der Anode das Inertfluid 24a. Vorzugsweise wird das Inertfluid in die Brennstoffleitungseinheit 20a und/oder die Speichereinheit 46a eingespeist. Vorzugsweise wird das zu der Kathode abtransportierte Oxidans der Oxidanselektrode zugeführt.

Vorzugsweise umfasst das Verfahren 52 zumindest einen regulären Betrieb 72a. Vorzugsweise versorgt die Brennstoffquelle 21a in dem regulären Betrieb 72a die Brennstoffzelleneinheit 12a mit dem brennstoffhaltigen Arbeitsfluid 16a. Vorzugsweise treibt die Inerteinheit 22a während des regulären Betriebs 72a zumindest zeitweise ein Oxidans aus dem Inertfluid 24a zumindest im Wesentlichen vollständig aus. Vorzugsweise füllt die Inerteinheit 22a während des regulären Betriebs 72a die Speichereinheit 46a auf. Vorzugsweise wird ein Betrieb der Inerteinheit 22a während des regulären Betriebs 72a eingestellt, wenn die Speichereinheit 46a einen zuvor bestimmten Füllstand und/oder Überdruck erreicht hat.

Vorzugsweise umfasst das Verfahrens 52a zumindest einen oxidanskontrollierten Betrieb 74a. In dem oxidanskontrollierten Betrieb 74a wird eine Restoxidansmenge in dem Inertfluid 24a auf einen Sollwert gesteuert oder geregelt. Vorzugsweise wird in dem oxidanskontrollierten Betrieb 74a das Inertfluid 24a mit der vorgegebenen und/oder manuell einstellbaren Restoxidansmenge in die Brennstoffleitungseinheit 20a eingespeist. Vorzugsweise wird in dem oxidanskontrollierten Betrieb 74a das Inertfluid 24a mit der Restoxidansmenge zu der Brennstoffzelleneinheit 12a geführt. Vorzugsweise löst die Restoxidansmenge in der Brennstoffzelleneinheit 12a, vor allem in der Brennstoffelektrode, befindliche Kohlenstoffablagerungen.

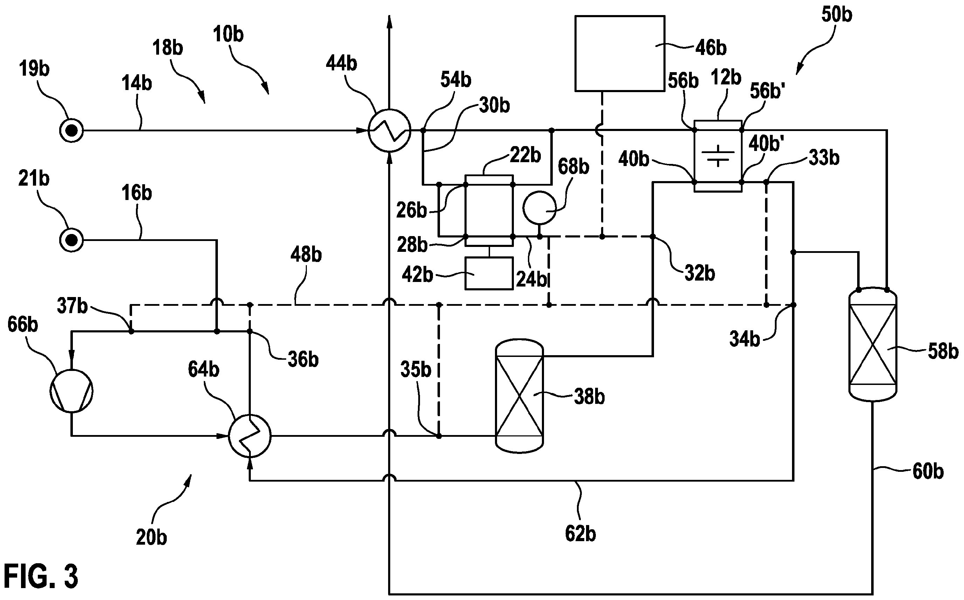

In der Figur 3 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In dem Ausführungsbeispiel der Figur 3 ist der Buchstabe a durch den Buchstaben b ersetzt.

Figur 3 zeigt ein Brennstoffzellensystem 50b. Das Brennstoffzellensystem 50b umfasst zumindest eine Brennstoffzellenvorrichtung 10b. Das Brennstoffzellensystem 50b umfasst zumindest eine Brennstoffzelleneinheit 12b.

Die Brennstoffzellenvorrichtung 10b ist zu einer Versorgung der Brennstoffzelleneinheit 12b mit Arbeitsfluiden 14b, 16b vorgesehen. Die Brennstoffzellenvorrichtung 10b umfasst zumindest eine Oxidansleitungseinheit 18b. Die Oxidansleitungseinheit 18b ist zu einer Handhabung eines oxidanshaltigen Arbeitsfluids 14b vorgesehen. Die Brennstoffzellenvorrichtung 10b umfasst zumindest eine Brennstoffleitungseinheit 20b. Die Brennstoffleitungseinheit 20b ist zu einer Handhabung eines brennstoffhaltigen Arbeitsfluids 16b vorgesehen. Die Brennstoffzellenvorrichtung 10b umfasst zumindest eine Inerteinheit 22b. Die Inerteinheit 22b ist zu einer Einspeisung zumindest eines Inertfluids 24b in die Brennstoffleitungseinheit 20b vorgesehen. Die Inerteinheit 22b umfasst zumindest eine Brennstoffzelle zu einer Erzeugung des Inertfluids 24b. Die Inerteinheit 22b umfasst zumindest einen Kathodeneinlass 26b. Die Inerteinheit 22b umfasst zumindest einen Anodeneinlass 28b. Der Kathodeneinlass 26b und der Anodeneinlass 28b sind fluidtechnisch an die Oxidansleitungseinheit 18b angeschlossen.

Die Brennstoffzellenvorrichtung 10b umfasst zumindest eine Wärmeübertragereinheit 44b zu einem Wärmeaustausch zwischen der Brennstoffzelleneinheit 12b und der Inerteinheit 22b. Vorzugsweise ist die Wärmeübertragereinheit 44b fluidtechnisch stromaufwärts einer Verzweigung 54b der Oxidansleitungseinheit 18b, vorzugsweise zwischen der Verzweigung 54b und einer Oxidansquelle 19b der Oxidansleitungseinheit 18b, angeschlossen.

Die Brennstoffzellenvorrichtung 10b umfasst eine Verteilungseinheit 48b. Die Verteilungseinheit 48b ist zu einer Einstellung einer Einspeisestelle 32b, 33b, 34b, 35b, 36b, 37b für das Inertfluid 24b in die Brennstoffleitungseinheit 20b vorgesehen. Vorzugsweise ist zumindest eine der Einspeisestellen 32b, 35b, 37b in einer Brennstoffzufuhr der Brennstoffleitungseinheit 20a angeordnet. Vorzugsweise ist zumindest eine der Einspeisestellen 34b, 36b in einer Rezirkulationsleitung 62b der Brennstoffleitungseinheit 20b angeordnet. Vorzugsweise ist zumindest eine der Einspeisestellen 32b fluidtechnisch zwischen einem Reformer 38b der Brennstoffleitungseinheit 20b und der Brennstoffzelleneinheit 12b angeordnet. Vorzugsweise ist zumindest eine der Einspeisestellen 33b fluidtechnisch zwischen der Brennstoffzelleneinheit 12b und einem Nachbrenner 58b angeordnet. Vorzugsweise ist zumindest eine der Einspeisestellen 34b zwischen der Brennstoffzelleneinheit 12b und einer weiteren Wärmeübertragereinheit 64b der Brennstoffleitungseinheit 20b angeordnet. Vorzugsweise ist zumindest eine der Einspeisestellen 35b fluidtechnisch zwischen der weiteren Wärmeübertragereinheit 64b und dem Reformer 38b angeordnet. Vorzugsweise ist zumindest eine der Einspeisestellen 36b, 37b fluidtechnisch zwischen der weiteren Wärmeübertragereinheit 64b und einer Fluidfördereinheit 66b der Brennstoffleitungseinheit 20b angeordnet. Vorzugsweise ist zumindest eine der Einspeisestellen 37b fluidtechnisch zwischen einer Brennstoffquelle 21b der Brennstoffleitungseinheit 20b und der Fluidfördereinheit 66b angeordnet. Alternativ ist es denkbar, dass die Brennstoffzellenvorrichtung 10b nur einzelne oder eine beliebige Kombination der oben genannten Einspeisestellen 32b, 33b, 34b, 35b, 36b, 37b aufweist.

Hinsichtlich weiterer Merkmale und/oder Funktionen der Brennstoffzellenvorrichtung 10b darf auf die Beschreibung der Figuren 1 und 2 verwiesen werden. Vorzugsweise ist die Brennstoffzellenvorrichtung 10b zu einer Durchführung des Verfahrens 52a geeignet.

## Patentansprüche

1. Brennstoffzellenvorrichtung zu einer Versorgung zumindest einer Brennstoffzelleneinheit (12a; 12b), vorzugsweise einer Hochtemperaturbrennstoffzelleneinheit, mit Arbeitsfluiden (14a, 16a; 14b, 16b), mit zumindest einer Oxidansleitungseinheit (18a; 18b) zu einer Handhabung eines oxidanshaltigen Arbeitsfluids (14a; 14b), vorzugsweise Luft, mit zumindest einer Brennstoffleitungseinheit (20a; 20b) zu einer Handhabung eines brennstoffhaltigen Arbeitsfluids (16a; 16b), vorzugsweise Erdgas, und mit zumindest einer Inerteinheit (22a; 22b) zu einer Einspeisung zumindest eines Inertfluids (24a; 24b) in die Brennstoffleitungseinheit (20a; 20b), **dadurch gekennzeichnet, dass** die Inerteinheit (22a; 22b) zu einer Erzeugung des Inertfluids (24a; 24b) zumindest eine Brennstoffzelle umfasst, wobei ein Kathodeneinlass (26a; 26b) und ein Anodeneinlass (28a; 28b) der Inerteinheit (22a; 22b) fluidtechnisch an die Oxidansleitungseinheit (18a; 18b) angeschlossen sind.

2. Brennstoffzellenvorrichtung nach Anspruch 1, **dadurch gekennzeichnet, dass** die Oxidansleitungseinheit (18a; 18b) für den Kathodeneinlass (26a; 26b) und für den Anodeneinlass (28a; 28b) der Inerteinheit (22a; 22b) eine gemeinsame Zufuhrleitung (30a; 30b) aufweist.

3. Brennstoffzellenvorrichtung nach Anspruch 1 oder 2, **gekennzeichnet durch** eine Einspeisestelle (32a; 32b) für das Inertfluid (24a; 24b) in die Brennstoffleitungseinheit (20a; 20b), welche zwischen einem Reformer (38a; 38b) der Brennstoffleitungseinheit (20a; 20b) und einem Anschluss (40a; 40b) der Brennstoffleitungseinheit (20a; 20b) für die Brennstoffzelleneinheit (12a; 12b) angeordnet ist.

4. Brennstoffzellenvorrichtung nach einem der vorhergehenden Ansprüche, **dadurch gekennzeichnet, dass** die Inerteinheit (22a; 22b) zumindest ein Leistungsreglerelement (42a; 42b) zu einer Einstellung einer Restoxidansmenge in dem Inertfluid (24a; 24b) umfasst.

5. Brennstoffzellenvorrichtung nach einem der vorhergehenden Ansprüche, **gekennzeichnet durch** zumindest eine Wärmeübertragereinheit (44b) zu einem Wärmeaustausch zwischen der Brennstoffzelleneinheit (12b) und der Inerteinheit (22b).

6. Brennstoffzellenvorrichtung nach einem der vorhergehenden Ansprüche, **gekennzeichnet durch** zumindest eine Speichereinheit (46a; 46b) zu einer Zwischenspeicherung des mittels der Inerteinheit (22a; 22b) erstellten Inertfluids (24a; 24b).

7. Brennstoffzellenvorrichtung nach einem der vorhergehenden Ansprüche, **gekennzeichnet durch** eine Verteilungseinheit (48b) zu einer Einstellung einer Einspeisestelle (32b, 33b, 34b, 35b, 36b, 37b) für das Inertfluid (24b) in die Brennstoffleitungseinheit (20b).

8. Brennstoffzellensystem mit einer Brennstoffzellenvorrichtung nach einem der vorhergehenden Ansprüche und mit zumindest einer Brennstoffzelleneinheit (12a; 12b).

9. Verfahren zu einem Betrieb einer Brennstoffzellenvorrichtung nach einem der Ansprüche 1 bis 7 und/oder eines Brennstoffzellensystems nach Anspruch 8.

10. Verfahren nach Anspruch 9, **dadurch gekennzeichnet, dass** in zumindest einem Verfahrensschritt eine Restoxidansmenge in dem Inertfluid (24a) auf einen Sollwert gesteuert oder geregelt wird.

11. Verfahren nach Anspruch 9 oder 10, **dadurch gekennzeichnet, dass** in zumindest einem Verfahrensschritt ein Oxidans aus dem Inertfluid (24a) zumindest im Wesentlichen vollständig ausgetrieben wird.

## Claims

1. Fuel-cell device for supplying working fluids (14a, 16a; 14b, 16b) to at least one fuel-cell unit (12a; 12b), preferably a high-temperature fuel-cell unit, having at least one oxidant-line unit (18a; 18b) for handling an oxidant-containing working fluid (14a; 14b), preferably air, having at least one fuel-line unit (20a; 20b) for handling a fuel-containing working fluid (16a; 16b), preferably natural gas, and having at least one inert unit (22a; 22b) for feeding at least one inert fluid (24a; 24b) into the fuel-line unit (20a; 20b), **characterized in that,** for producing the inert fluid (24a; 24b), the inert unit (22a; 22b) comprises at least one fuel cell, wherein a cathode inlet (26a; 26b) and an anode inlet (28a; 28b) of the inert unit (22a; 22b) are fluidically connected to the oxidant-line unit (18a; 18b) .

2. Fuel-cell device according to Claim 1, **characterized in that** the oxidant-line unit (18a; 18b) has a common supply line (30a; 30b) for the cathode inlet (26a; 26b) and for the anode inlet (28a; 28b) of the inert unit (22a; 22b).

3. Fuel-cell device according to Claim 1 or 2, **characterized by** an infeed point (32a; 32b) for the inert fluid (24a; 24b) into the fuel-line unit (20a; 20b), which is arranged between a reformer (38a; 38b) of the fuel-line unit (20a; 20b) and a connection (40a; 40b) of the fuel-line unit (20a; 20b) for the fuel-cell unit (12a; 12b).

4. Fuel-cell device according to one of the preceding claims, **characterized in that** the inert unit (22a; 22b) comprises at least one power-regulator element (42a; 42b) for setting of a residual-oxidant quantity in the inert fluid (24a; 24b).

5. Fuel-cell device according to one of the preceding claims, **characterized by** at least one heat-transfer unit (44b) for exchange of heat between the fuel-cell unit (12b) and the inert unit (22b).

6. Fuel-cell device according to one of the preceding claims, **characterized by** at least one storage unit (46a; 46b) for intermediate storage of the inert fluid (24a; 24b) produced by means of the inert unit (22a; 22b).

7. Fuel-cell device according to one of the preceding claims, **characterized by** a distribution unit (48b) for setting of an infeed point (32b, 33b, 34b, 35b, 36b, 37b) for the inert fluid (24b) into the fuel-line unit (20b).

8. Fuel-cell system having a fuel-cell device according to one of the preceding claims and having at least one fuel-cell unit (12a; 12b).

9. Method for operation of a fuel-cell device according to one of Claims 1 to 7 and/or of a fuel-cell system according to Claim 8.

10. Method according to Claim 9, **characterized in that,** in at least one method step, a residual-oxidant quantity in the inert fluid (24a) is controlled or regulated to a target value.

11. Method according to Claim 9 or 10, **characterized in that,** in at least one method step, an oxidant is at least substantially completely expelled from the inert fluid (24a).

## Revendications

1. Dispositif de pile à combustible pour une alimentation d'au moins une unité de pile à combustible (12a ; 12b), de préférence d'une unité de pile à combustible à haute température, en fluides de travail (14a, 16a ; 14b, 16b), avec au moins une unité de conduite d'oxydant (18a ; 18b) pour une manipulation d'un fluide de travail contenant un oxydant (14a ; 14b), de préférence de l'air, avec au moins une unité de conduite de combustible (20a ; 20b) pour une manipulation d'un fluide de travail contenant un combustible (16a ; 16b), de préférence du gaz naturel, et avec au moins une unité d'inertage (22a ; 22b) pour une introduction d'au moins un fluide inerte (24a ; 24b) dans l'unité de conduite de combustible (20a ; 20b), **caractérisé en ce que** l'unité d'inertage (22a ; 22b) comprend au moins une pile à combustible pour une production du fluide inerte (24a ; 24b), une entrée de cathode (26a ; 26b) et une entrée d'anode (28a ; 28b) de l'unité d'inertage (22a ; 22b) étant raccordées fluidiquement à l'unité de conduite d'oxydant (18a ; 18b).

2. Dispositif de pile à combustible selon la revendication 1, **caractérisé en ce que** l'unité de conduite d'oxydant (18a ; 18b) présente une conduite d'amenée commune (30a ; 30b) pour l'entrée de cathode (26a ; 26b) et pour l'entrée d'anode (28a ; 28b) de l'unité d'inertage (22a ; 22b).

3. Dispositif de pile à combustible selon la revendication 1 ou 2, **caractérisé par** un point d'introduction (32a ; 32b) pour le fluide inerte (24a ; 24b) dans l'unité de conduite de combustible (20a ; 20b), qui est agencé entre un reformeur (38a ; 38b) de l'unité de conduite de combustible (20a ; 20b) et un raccord (40a ; 40b) de l'unité de conduite de combustible (20a ; 20b) pour l'unité de pile à combustible (12a ; 12b).

4. Dispositif de pile à combustible selon l'une quelconque des revendications précédentes, **caractérisé en ce que** l'unité d'inertage (22a ; 22b) comprend au moins un élément de régulation de puissance (42a ; 42b) pour un ajustement d'une quantité d'oxydant résiduel dans le fluide inerte (24a ; 24b).

5. Dispositif de pile à combustible selon l'une quelconque des revendications précédentes, **caractérisé par** au moins une unité de transfert de chaleur (44b) pour un échange de chaleur entre l'unité de pile à combustible (12b) et l'unité d'inertage (22b).

6. Dispositif de pile à combustible selon l'une quelconque des revendications précédentes, **caractérisé par** au moins une unité de stockage (46a ; 46b) pour un stockage intermédiaire du fluide inerte (24a ; 24b) produit au moyen de l'unité d'inertage (22a ; 22b).

7. Dispositif de pile à combustible selon l'une quelconque des revendications précédentes, **caractérisé par** une unité de distribution (48b) pour un ajustement d'un point d'introduction (32b, 33b, 34b, 35b, 36b, 37b) pour le fluide inerte (24b) dans l'unité de conduite de combustible (20b).

8. Système de pile à combustible avec un dispositif de pile à combustible selon l'une quelconque des revendications précédentes et avec au moins une unité de pile à combustible (12a ; 12b).

9. Procédé d'exploitation d'un dispositif de pile à combustible selon l'une quelconque des revendications 1 à 7 et/ou d'un système de pile à combustible selon la revendication 8.

10. Procédé selon la revendication 9, **caractérisé en ce que,** dans au moins une étape de procédé, une quantité d'oxydant résiduel dans le fluide inerte (24a) est commandée ou régulée à une valeur de consigne.

11. Procédé selon la revendication 9 ou 10, **caractérisé en ce que,** dans au moins une étape de procédé, un oxydant est éliminé au moins essentiellement en totalité du fluide inerte (24a).
